# EUROPÄISCHE PATENTSCHRIFT

(11) **EP 0 570 803 B1**
(45) Veröffentlichungstag und Bekanntmachung des Hinweises auf die Patenterteilung: **25.09.1996**
(21) Anmeldenummer: 93107584.0
(22) Anmeldetag: 10.05.1993
(51) Int. Cl.: D04H 1/00, D04H 1/42

(54) **Verfahren zum Herstellen von Formteilen durch Verpressen von faserigem Material unter gleichzeitiger Verklebung sowie Formteile nach diesem Verfahren**
Method of producing moulded parts by compressing fibrous material with simultaneous bonding and articles manufactured according to this method
Procédé de fabrication de pièces moulées par compression d'une matière fibreuse avec collage simultané et les objets obtenus selon ce procédé

(30) Priorität: 15.05.1992 DE 4216129
(43) Veröffentlichungstag der Anmeldung: 24.11.1993
(73) Patentinhaber: HOECHST AKTIENGESELLSCHAFT, 65926 Frankfurt am Main (DE)
(72) Erfinder: Knobloch, Peter, W-8934 Grossaitingen (DE)

(56) Entgegenhaltungen:
- EP-A- 0 160 270
- EP-A- 0 476 538
- WO-A-91/01396
- WO-A-91/16119
- DE-A- 2 136 124
- DE-C- 3 239 732
- DE-U- 9 111 705
- US-A- 3 759 775

## Beschreibung

Die Erfindung betrifft ein Verfahren zum Herstellen von Formteilen, bei dem faseriges Material mit einem Kleber vermischt und unter Druck bis zum Abbinden des Klebers in einer Form gehalten wird.

Ein Verfahren zum Herstellen von Formteilen ist beispielsweise in der EP-B-0 160 270 beschrieben. Dort wird auch auf die verschiedenen Möglichkeiten zum Aufbau derartiger Materialien eingegangen. Als faserige Ausgangsmaterialien sind Reißwolle, Holz, Späne und gerissene Papierreste genannt. mit besonderem Vorteil auch Reste aus der Verarbeitung von Kunstfasern, insbesondere Fasern aus Polyethylenterephthalat, im allgemeinen als Polyesterfasern bezeichnet, die in Form von Reißwolle eingesetzt werden.

Obige Patentschrift nennt im Beispiel Reißwolle aus Polyester Spunbond-Resten, also ein zerissenes Spinnvlies.

Gemäß den Ansprüchen der obigen Europäischen Patentschrift wird dieses faserige Material mit einem Pulvergemisch aus einem Schmelzkleber auf Basis eines Copolymerisats aus Vinylester und mindestens einem weiteren Vinylmonomeren, einem festen Epoxidharz und einem Härter für das Epoxidharz vermischt und das zu verpressende Gemisch in einer Form unter Druck auf eine Temperatur erwärmt, bei der der Schmelzkleber flüssig wird und bei der das Epoxidharz mit seinem Härter reagiert.

Es ist bekannt, daß der erstgenannte Kleber aus Basis eines Copolymerisates aus Vinylester der so erzeugten Platte bevorzugt elastische Eigenschaften verleiht. Das feste Epoxidharz als zweiter Kleber verleiht dem Produkt Härte.

Es hat sich gezeigt, daß der ausschließliche Einsatz von Reißwollen eine große innere Oberfläche bedeutet und damit hohen Klebereinsatz erfordert. Wird dieses Material wiederum zerkleinert und erneut zu Platten verpreßt, steigt der Kleberanteil rasch an. Die Möglichkeit, die derart hergestellten Formteile nochmals zu recyclisieren, ist deshalb begrenzt.

Der vorliegenden Erfindung liegt die Aufgabe zugrunde, ein Verfahren zur Verfügung zu stellen, mit dem es möglich wird, Formteile von ausreichender Festigkeit und Härte zu erhalten, die ein- oder mehrfach recyclisierbar sind. Dazu wird erfindungsgemäß vorgeschlagen, neben einem feinfaserigen Material wie einer Reißwolle oder zerkleinerten Polyester Spunbond-Resten, einen Kurzschnitt aus vollsynthetischen hochmolekularen Monofilamenten einzusetzen. Diese verleihen dem herzustellenden Plattenmaterial eine derart ausreichende Steifigkeit, daß ausschließlich mit einem Klebersystem gearbeitet werden kann, das dem Plattenmaterial Zusammenhalt und elastische Eigenschaften verleiht und das nur in geringen Mengen zum Einsatz kommt. Dabei kann es sich z.B. um einen Schmelzkleber handeln, beispielsweise auf der Basis eines Copolymerisates aus Vinylester und eventuell einem weiteren Vinylmonomeren. In diesem Fall erhält das Plattenmaterial gewünschte elastische Eigenschaften und den Zusammenhalt als Formteil aus dem Kleber und darüber hinaus notwendige Festigkeitseigenschaften, besonders Steifigkeit und Härte aus den eingesetzten kurzgeschnittenen Monofilamenten. Gleichzeitig kann der Kleberanteil reduziert werden, da die innere Oberfläche geringer ist.

Als faseriges Material für das herzustellende Formteil werden zwei Komponenten eingesetzt mit grundsätzlich verschiedenen Eigenschaften:

Die eine Komponente ist ein feinfaseriges Material, wie eine Reißwolle, auch ein zerkleinerter Spinnvliesstoff, Reste von Synthesefasern aus dem Herstellungsprozeß, aus den Prozessen der Weiterverarbeitung, auch nach Gebrauch.

Bei den Synthesefasern kann es sich um Polyester, insbesondere um Polyethylenterephthalat, um Polyamid oder um Polyacrylnitril handeln. Unter dem Begriff "faseriges Material" ist ein Material zu verstehen, dessen Titer beträchtlich unter dem Titer des jeweils eingesetzten Monofilaments liegt, Typische Titerbereiche für das feinfaserige Material liegen zwischen 1 und 10 dtex, vorzugsweise 2 bis 5 dtex.

Bei der zweiten Komponente handelt es sich um geschnittene, gehäckselte, gerissene synthetische Monofilamente. Vorzugsweise handelt es sich dabei um schmelzgesponnene Monofilamente, die eine Querschnittsfläche von mindestens 0,01 mm², eine Schnittlänge von 3 bis 30 mm und ein Verhältnis von Länge zu Durchmesser von mindestens 3 aufweisen. Ein solcher Monofilamentkurzschnitt ist in dem DE-Gebrauchsmuster G 91 11 705.4 beschrieben. Geeignetes Ausgangsmaterial für derartigen Monofilament-Kurzschnitt fällt bei der Herstellung dieser Monofilamente an, bei der Weiterverarbeitung, gegebenenfalls auch nach Gebrauch. Ebenso kann dieses Monofilament auch in Form zerschnittener bzw. gehäckselter Monofilamentgewebe mit einer Plättchenfläche von 0,1 bis 1,0 cm² und abgeleitet von textilen Flächengebilden eines Flächengewichts von 50 bis etwa 2000 g/m², eingesetzt werden, wie in dem Gebrauchsmuster G 91 11 706.2 beschrieben. Ebenso kann eine Mischung dieser beiden Formen von Monofilamenten eingesetzt werden. Die Steifigkeit und Härte verleihenden Eigenschaften dieser monofilen Komponente werden nicht dadurch nennenswert beeinträchtigt, daß die Monofilamente als gehäckseltes Gewebe oder als einzelnder freiliegender monofiler Kurzschnitt vorliegen.

Es bestehen keine Einschränkungen bezüglich der einzusetzenden Polymersysteme. Um mit Einfachstoffsystemen zu arbeiten, bietet sich an, beide Komponenten aus dem gleichen Polymersystem zu wählen, etwa aus Polyethylenterephthalat.

Die Art des Klebers kann in weiten Bereichen variiert werden. Neben flüssigen Klebern sind insbesondere pulverförmige Kleber geeignet. Neben Schmelzklebern können auch reaktive Kleber zum Einsatz gelangen. Hinsichtlich der Chemie ist die Auswahl des Klebers keinen Einschränkungen unterworfen. Neben Klebern auf Epoxid- und/oder Polyurethanbasis kommen auch Thermoplaste in Frage, die durch Erhitzen verflüssigt werden und beim Abkühlen das faserige Material verbinden.

Es kann insbesondere mit einem Klebersystem gearbeitet werden, das den entstehenden Formteilen bevorzugt Zusammenhalt und elastische Eigenschaften verleiht, da der monofile Anteil des Fasermaterials Steifigkeit und Härte vermittelt. Dies wird beispielsweise durch Schmelzkleber, auf der Basis eines Copolymerisates aus Vinylester erreicht. Die Verwendung von verschiedenen Klebern und der Einsatz komplexer Mehrstoffsysteme kann also vermieden werden.

Bevorzugte Kleber sind gebräuchliche und eingeführte Produkte aus anderen Arbeitsgebieten, deren Arbeitstemperatur unter der Schmelztemperatur der eingesetzten Fasermaterialien liegen.

Die Klebermenge kann dann besonders gering gehalten werden, wenn der Monofilamentanteil hoch ist, die innere Oberfläche also gering ist. So nennt die oben zitierte EP-B-0 160 270 80 - 95 Gewichtsteile faseriges Material und 5 - 20 Gewichtsteile Kleber, vorzugsweise ein Gewichtsverhältnis von 90:10. Bei der vorliegenden Erfindung wird jetzt mit hohem Monofilamentanteil die Möglichkeit eröffnet, den Kleberanteil auf um und unter 5 % zu senken, beispielsweise in den Bereich von 3 - 5 %. Dem Wunsch nach Einstoffsystemen und der Möglichkeit erneuter Recycelbarkeit wird damit in besonderem Maße Rechnung getragen.

Zur Herstellung der erfindungsgemäßen Formteile werden alle Komponenten innig gemischt, in einer heizbaren Presse gleichmäßig verteilt entsprechend dem späteren m²-Gewicht, unter Druck erhitzt. Die Temperatur richtet sich nach der Arbeitstemperatur des Klebers. Die Preßzeit ist so zu wählen, daß im Inneren des Formteils der Kleber voll reagieren kann. Preßdruck bzw. Plattenabstand der Presse richten sich nach der gewünschten Dichte des Formteils. Entlastung erfolgt, wenn der Kleber seine volle Klebewirkung ausübt. Dies ist je nach Klebesystem z.B. nach Unterschreiten einer bestimmten Temperatur der Fall.

Die erfindungsgemäßen Formteile können in sehr verschiedenen Einsatzgebieten wegen ihrer tragenden Eigenschaften eingesetzt werden, etwa als stabilisierende Platte im Bereich der Verpackung beim Aufbau von Packstrücken. Sie können auch als schal- und wärmedämmendes Material eingesetzt werden, beispielsweise im Innenausbau. Sie können im Fahrzeugbau als Isolationsmaterial und Antidröhnmaterial eingesetzt werden, oder auch dort, wo mehrere dieser Funktionen zugleich gefordert sind. Dies ist beispielsweise auch im Bereich des Bauwesens der Fall. Diese Formteile werden bevorzugt dann eingesetzt, wenn ein erneutes Recyceln vorgesehen ist. Durch den geringen Kleberanteil erfolgt nur eine langsame Anreicherung der Kleberkomponente bei wiederholtem Kreislauf. Der geringe Kleberanteil wird der Forderung nach einem Einstoffsystem weitgehend gerecht, wenn z.B. die beiden faserigen Komponenten aus dem gleichen Hochpolymeren aufgebaut sind, etwa aus Polyethylenterephthalat. Diese Formteile werden bevorzugt dann eingesetzt, wenn in besonderem Maße elastische Eigenschaften aus dem faserigen Anteil und/oder die Forderung nach Härte und Steifheit aus dem monofilen Anteil gefordert sind.

Es besteht die Möglichkeit, mit dem geringen Kleberanteil eine zusätzlich wasserabweisende Komponente zuzusetzen. Marktgebräuchliche Zusätze können unter den Gesichtspunkt ausgewählt werden, daß sie der Temperatur widerstehen, die maximal bei der Bildung des Formteils auftreten und mit den einzusetzenden Materialien mischbar sind.

## Patentansprüche

1. Verfahren zum Herstellen von recyclisierbaren Formteilen, bei dem ein faseriges Material mit einem Kleber vermischt und unter Druck bis zum Abbinden des Klebers in einer Form gehalten wird, dadurch gekennzeichnet, daß als fasriges Material ein Gemisch aus einem im wesentlichen feinfasrigen Material mit einem Titer zwischen 1 und 10 dtex auf der Basis von Synthesefasern und einem Kurzschnitt aus vollsynthetischen hochmolekularen Monofilamenten, der ein Verhältnis von Länge zu Durchmesser von mindestens 3 hat, das dem herzustellenden Formteil die notwendige Härte und Steifigkeit vermittelt, eingesetzt wird, und daß der Schmelzkleberanteil im fertigen Formteil weniger als 10 Gew.%, bezogen auf das Formteil, beträgt.

2. Verfahren gemäß Anspruch 1, dadurch gekennzeichnet, daß das feinfasrige Material eine Reißwolle auf der Basis von Synthesefasern und/oder ein zerkleinertes Vlies, insbesondere ein zerkleinertes Spinnvlies, ist.

3. Verfahren gemäß Anspruch 1, dadurch gekennzeichnet, daß es sich bei dem feinfasrigen Material um Fasern handelt, die einen Titer zwischen 2 und 5 dtex aufweisen.

4. Verfahren gemäß Anspruch 1, dadurch gekennzeichnet, daß als Kleber ein pulverförmiger Schmelzkleber verwendet wird und daß das fasrige Material mit dem Kleber gemischt, in einer Form unter Druck auf eine solche Temperatur erwärmt wird, daß der Schmelzkleber flüssig wird und unter Abbinden ein fester Formkörper entsteht.

5. Verfahren gemäß Anspruch 1, dadurch gekennzeichnet, daß ein Schmelzkleber auf der Basis eines Copolymerisates aus Vinylester und mindestens einem weiteren Vinylmonomeren eingesetzt wird.

6. Verfahren gemäß Anspruch 1, dadurch gekennzeichnet, daß der Anteil der Monofilamente, bezogen auf das fasrige Material, 10 bis 90 Gew.% beträgt.

7. Verfahren gemäß Anspruch 1, dadurch gekennzeichnet, daß die kurzgeschnittenen Monofilamente in freiliegender Form und/oder in Form kleiner Gewebestücke eingesetzt werden.

8. Verfahren gemäß Anspruch 2, dadurch gekennzeichnet, daß die Reißwolle und/oder das zerkleinerte Vlies und die Monofilamente aus dem gleichen Polymeren bestehen.

9. Verfahren gemäß Anspruch 1, dadurch gekennzeichnet, daß das fasrige Material aus Polyestern, insbesondere aus Polyethylenterephthalat, besteht.

10. Verfahren gemäß Anspruch 1, dadurch gekennzeichnet, daß der Anteil des Klebers 2 bis 10 Gew.%, bezogen auf das Formteil, beträgt.

11. Verfahren gemäß Anspruch 1, dadurch gekennzeichnet, daß der Anteil des Klebers 3 bis 5 Gew.%, bezogen auf das Formteil, beträgt.

12. Verfahren gemäß Anspruch 1, dadurch gekennzeichnet, daß das faserige Material mit einem Kleber und zusätzlich mit einer wasserabstoßenden Komponente vermischt werden, um einem Eindringen von Wasser infolge von Kapillarwirkung entgegenzuwirken.

13. Formteil aus fasrigem Material und kurzgeschnittenen Monofilamenten erhältlich nach dem Verfahren gemäß Anspruch 1, dadurch gekennzeichnet, daß der Anteil der Monofilamente so ausgewählt ist, daß die Monofilamente im wesentlichen zur Härte und Festigkeit des Formteils beitragen, während das feinfasrige Material und der Kleber im wesentlichen die elastischen Eigenschaften bestimmen.

## Claims

1. A process for manufacturing recyclable shaped articles by mixing a fibrous material with an adhesive and maintaining the mixture in a mold under pressure until the adhesive has set, which comprises using a fibrous material comprising a mixture of an essentially finely fibrous material having a linear density between 1 and 10 dtex and based on synthetic fiber and a chop of wholly synthetic high molecular weight monofilaments which has a length to diameter ratio of at least 3, which mixture confers the necessary hardness and stiffness on the shaped article to be manufactured, the hot melt adhesive content of the ready-produced shaped article being less than 10 % by weight, based on the shaped article.

2. The process of claim 1, wherein the finely fibrous material is a shoddy based on synthetic fiber and/or a comminuted bonded fiber web, in particular a comminuted spunbonded.

3. The process of claim 1, wherein the finely fibrous material comprises fiber having a linear density between 2 and 5 dtex.

4. The process of claim 1, wherein the adhesive used is a pulverulent hot melt adhesive and the fibrous material is mixed with the adhesive, heated in a mold under pressure to such a temperature that the hot melt adhesive liquefies and sets to form a solid article.

5. The process of claim 1, wherein a hot melt adhesive based on a copolymer of a vinyl ester and at least one further vinyl monomer is used.

6. The process of claim 1, wherein the proportion of monofilament, based on the fibrous material, is 10 to 90 % by weight.

7. The process of claim 1, wherein the chopped monofilaments are used in free form and/or in the form of small pieces of fabric.

8. The process of claim 2, wherein the shoddy and/or the comminuted bonded fiber web and the monofilaments are made of the same polymer.

9. The process of claim 1, wherein the fibrous material is made of polyester, in particular polyethylene terephthalate.

10. The process of claim 1, wherein the adhesive comprises 2 to 10 % by weight, based on the shaped article.

11. The process of claim 1, wherein the adhesive comprises 3 to 5 % by weight, based on the shaped article.

12. The process of claim 1, wherein the fibrous material is mixed with an adhesive and additionally with a water-repellent component in order to counteract any ingress of water due to capillary action.

13. A shaped article obtainable from fibrous material and chopped monofilaments by the process of claim 1, wherein the proportion of monofilament is such that the monofilaments contribute essentially to the hardness and strength of the article while the finely fibrous material and the adhesive determine essentially the elastic properties.

## Revendications

1. Procédé pour préparer des éléments moulés recyclables dans lequel on mélange une matière fibreuse avec un adhésif et on maintient sous pression dans un moule jusqu'à la prise de l'adhésif, caractérisé en ce que l'on utilise en tant que matières fibreuses un mélange d'une matière essentiellement finement fibreuse ayant un titre compris entre 1 et 10 dtex, de préférence de 2 à 5 dtex à base de fibres synthétiques et d'un monofilament de haut poids moléculaire entièrement synthétique, coupé court, qui a un rapport de la longueur au diamètre d'au moins 3, qui confère à l'élément moulé à préparer la dureté et la rigidité nécessaires, et que le taux en colle fusible dans l'élément moulé fini est inférieur à 10 % par rapport à l'élément moulé.

2. Procédé selon la revendication 1, caractérisé en ce que la matière finement fibreuse est une laine renaissance à base de fibres synthétiques et/ou d'une nappe fragmentée, plus particulièrement d'une nappe non tissée fragmentée.

3. Procédé selon la revendication 1, caractérisé en ce que dans le cas de la matière finement fibreuse, il s'agit de fibres qui présentent un titre compris entre 2 et 5 dtex.

4. Procédé selon la revendication 1, caractérisé en ce que l'on utilise en tant qu'adhésif une colle fusible pulvérulente et en ce que l'on mélange la matière fibreuse avec l'adhésif, on chauffe sous pression dans un moule à une température où la colle fusible devient liquide et il se forme un élément moulé solide pendant qu'il se produit la prise de la colle.

5. Procédé selon la revendication 1, caractérisé en ce que l'on utilise une colle fusible à base d'un copolymère d'ester vinylique et au moins d'un autre monomère vinylique.

6. Procédé selon la revendication 1, caractérisé en ce que le taux en monofilament par rapport à la matière fibreuse est de 10 à 90 % en poids.

7. Procédé selon la revendication 1, caractérisé en ce que les monofilaments coupés court sont utilisés sous forme libre et/ou sous forme de petits morceaux de tissu.

8. Procédé selon la revendication 2, caractérisé en ce que la laine renaissance et/ou la nappe fragmentée et les monofilaments sont constitués du même polymère.

9. Procédé selon la revendication 1, caractérisé en ce que la matière fibreuse est constituée de polyesters, plus particulièrement de téréphtalate de polyéthylène.

10. Procédé selon la revendication 1, caractérisé en ce que le taux en adhésif est de 2 à 10 % par rapport à l'élément moulé.

11. Procédé selon la revendication 1, caractérisé en ce que le taux en adhésif est de 3 à 5 % par rapport à l'élément moulé.

12. Procédé selon la revendication 1, caractérisé en ce que la matière fibreuse est mélangée avec un adhésif et en plus avec un constituant hydrophobe afin d'agir contre la pénétration de l'eau suite à l'effet de capillarité.

13. Elément moulé en matière fibreuse et en monofilaments coupés court que l'on peut obtenir selon le procédé selon la revendication 1, caractérisé en ce que le taux en monofilament est choisi de façon telle que le monofilament contribue essentiellement à la dureté et à la solidité de l'élément moulé alors que la matière finement fibreuse et l'adhésif déterminent essentiellement les caractéristiques élastiques.
